(19) **Europäisches Patentamt / European Patent Office / Office européen des brevets**

(11) **EP 4 640 781 A1**

(12) **EUROPEAN PATENT APPLICATION**
published in accordance with Art. 153(4) EPC

(43) Date of publication:
29.10.2025 Bulletin 2025/44

(21) Application number: 23907067.5

(22) Date of filing: 20.12.2023

(51) International Patent Classification (IPC):
$C09J\ 163/00^{(2006.01)}$    $B32B\ 7/12^{(2006.01)}$
$B32B\ 27/00^{(2006.01)}$    $C09J\ 5/06^{(2006.01)}$
$C09J\ 171/08^{(2006.01)}$

(52) Cooperative Patent Classification (CPC):
B32B 7/12; B32B 27/00; C09J 5/06; C09J 163/00;
C09J 171/08

(86) International application number:
PCT/JP2023/045590

(87) International publication number:
WO 2024/135707 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.12.2022 JP 2022205984

(71) Applicant: Resonac Corporation
Tokyo 105-7325 (JP)

(72) Inventors:
• TAKAHASHI, Nobuyuki
Tokyo 105-7325 (JP)
• MORI, Masatoshi
Tokyo 105-7325 (JP)

(74) Representative: Strehl & Partner mbB
Maximilianstrasse 54
80538 München (DE)

(54) **METHOD FOR MANUFACTURING BONDED BODY**

(57) Provided is a bonding technique that is short in bonding process time, long in open time, and excellent in adhesiveness, with regard to a technique of bonding a member to be fitted having a portion to be fitted and a fitting member having a fitting portion to be fitted to the portion to be fitted of the member to be fitted. A method for producing a bonded body, the method including: a pre-bonding step in which a laminated body is prepared by arranging, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted; and a bonding step in which the laminated body is heated and pressurized to melt the solid bonding agent and bond the base material A and the base material B, in which the amorphous thermoplastic resin has an epoxy equivalent of 1,600 or more or does not contain an epoxy group and has a heat of fusion of 15 J/g or less.

[Fig. 1]

## EP 4 640 781 A1

**Description**

Technical Field

The present invention relates to a method for producing a bonded body which is suitable for applications in which dissimilar materials are easily and firmly bonded.

Background Art

In recent years, from the viewpoint of weight reduction and high performance, multi-materialization of components has been advanced in various fields such as automobile components, medical devices, and home electric appliances. Multi-materialization is a method for reducing the weight and increasing the strength of materials by using materials with different functions and materials (hereinafter, referred to as dissimilar materials) in combination. In order to realize multi-materialization, a technique for firmly bonding dissimilar materials is indispensable.

As a means for firmly bonding the dissimilar materials to each other, a thermosetting epoxy resin-based adhesive (PTL 1 and the like) which is a liquid type adhesive is widely used.

Bonding using a liquid type adhesive requires an application step of applying a liquid resin composition and a curing step of polymerizing and curing the resin composition after the application.

Therefore, when the bonding is performed using the liquid type adhesive, there is a problem that it takes a long time to coat the resin composition in the application step, and it takes a long time for the polymerization reaction in the curing step (that is, the bonding process time is long), resulting in a lack of convenience.

In the description herein, the bonding process time means a time from a start point to an end point with a time at which at least one kind of base material constituting the bonded body and a bonding agent are in contact as the start point and a time at which the production of the bonded body is completed as the end point. For example, the bonding process time includes a time required for a step of applying a liquid adhesive to the base material, a time required for a drying step, a time required for a step of placing a solid bonding agent, and a time required for bonding the base materials to each other (for example, curing an adhesive layer).

A technique has also been disclosed in which an epoxy resin composition is impregnated into or coated on a base material, then semi-cured (B-staged), and used as a B-stage-shaped laminated body with an adhesive layer for producing a bonded body (PTL 2 and the like).

However, bonding using a B-stage-shaped adhesive also requires a curing step of curing the adhesive layer in a semi-cured state by a polymerization reaction, and there is a problem that the bonding process time is long.

In addition, the B-stage-shaped adhesive has poor storage stability, cannot be stored for a long period of time at ordinary temperature, needs to be stored at a low temperature, and has a problem that the open time is short and lacks convenience.

In the description herein, the open time means a limited time from the application or placement of a bonding agent on a base material A to the completion of the placement of a base material B. When the open time is within the above range, the adhesive force of the bonding agent does not decrease, and the base material A and the base material B can be bonded to each other with sufficient adhesive force. As the open time is longer, the limited time from the application or placement of the bonding agent on the base material A to the completion of the placement of the base material B is longer, and the convenience is higher.

As a means for bonding dissimilar materials, a thermoplastic adhesive composition (hereinafter, referred to as a hot-melt adhesive) is also used (PTL 3 and the like). By using the hot-melt adhesive, specifically, since the hot-melt adhesive performs adhesion by utilizing a phase change that does not involve a polymerization reaction, an application step is unnecessary, the curing time is short (that is, the bonding process time is short), and the convenience is excellent. In addition, long-term storage at ordinary temperature is also possible, and convenience is excellent in that an open time is long.

However, since the conventional hot-melt adhesive is composed of a crystalline resin or a resin containing a crystalline resin in order to lower the melt viscosity, the cohesive force in the adhesive resin is high, and the hot-melt adhesive cannot have a sufficient interaction with the base material. In addition, during melting and adhesion, the viscosity becomes low at high temperatures, and it is easy to flow out from the adhesion surface, and the film thickness is not stable because it is difficult to control the viscosity. Due to these factors, there is a problem that a high adhesive force cannot be stably obtained with a conventional hot-melt adhesive.

Citation List

Patent Literature

PTL 1:JP 2019-157018 A
PTL 2:JP 10-17685 A
PTL 3:JP 10-168417 A

Summary of Invention

Technical Problem

As described above, among the conventional techniques, the thermosetting epoxy resin-based adhesive having excellent adhesiveness has at least one problem of a long bonding process time and a short open time in both liquid and B-stage forms, and there has been a problem that a hot-melt adhesive having a short bonding process time and a long open time cannot stably obtain high adhesive force.

The present invention has been made in view of such a technical background, and an object of the present invention is to provide a bonding technique for bonding a base material A, which is a member to be fitted having a portion to be fitted, and a base material B, which is a fitting member having a fitting portion to be fitted to the portion to be fitted of the member to be fitted, in which the bonding process time is short, the open time is long, and the bonding technique has excellent adhesiveness.

Solution to Problem

In order to achieve the above object, the present invention provides the following means.

In the description herein, bonding means coupling materials together, and adhesion and welding are narrower concepts thereof. Adhesion means that two adherends (to be adhered) are brought into a bonded state via an organic material (thermosetting resin, thermoplastic resin, or the like) such as a tape or an adhesive, and welding means that the surface of a thermoplastic resin or the like is melted by heat and brought into a bonded state by entanglement and crystallization due to molecular diffusion by contact pressurization and cooling.

<Method for Producing Bonded Body>

[1] A method for producing a bonded body, the method including:

a pre-bonding step in which a laminated body is prepared by arranging, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted; and
a bonding step in which the laminated body is heated and pressurized to melt the solid bonding agent and bond the base material A and the base material B,
in which the amorphous thermoplastic resin has an epoxy equivalent of 1,600 or more or does not contain an epoxy group and has a heat of fusion of 15 J/g or less.

[2] The method for producing a bonded body according to [1], in which the member to be fitted is made of a metal or a resin, and the fitting member is made of a metal.

[3] The method for producing a bonded body according to [1] or [2], in which the fitting portion is heated to 100°C to 400°C and fitted.

[4] A method for producing a bonded body obtained by bonding, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted, or a method for producing a bonded body obtained by bonding, in the following order, a base material A that is a fitting member having a fitting portion to be fitted to a portion to be fitted of a member to be fitted, a solid bonding agent containing an amorphous thermoplastic resin that is at least one type selected from a thermoplastic epoxy resin and a phenoxy resin, and a base material B that is the member to be fitted, the method including:

a first bonding step for bonding the base material A and the solid bonding agent by melting and then solidifying the solid bonding agent in a state in which the solid bonding agent is brought into surface contact with the base material A; and
a second bonding step for bonding the base material A and the base material B by melting and then solidifying the solid bonding agent in a state in which the solid bonding agent bonded to the base material A is brought into surface contact with the base material B;
in which the amorphous thermoplastic resin has an epoxy equivalent of 1,600 or more or does not contain an epoxy group and has a heat of fusion of 15 J/g or less.

[5] The method for producing a bonded body according to [4], in which in the first bonding step, the solid bonding agent is heated to 100°C to 300°C to be melted and then solidified.

[6] The method for producing a bonded body according to [4] or [5], in which in the second bonding step, the solid bonding agent is melted by at least one selected from the group consisting of contact heating, warm air heating, hot press, infrared heating, hot plate welding, ultrasonic welding, vibration welding, and high-frequency induction welding and then solidified.

[7] The method for producing a bonded body according to any one of [4] to [6], in which in the second bonding step, the solid bonding agent is melted at a heating temperature of 100°C to 400°C under a pressure of 0.01 to 20 MPa and then solidified.

[8] The method for producing a bonded body according to any one of [1] to [7], in which the solid bonding agent before melting has a film shape.

<Bonded Body>

[9] A bonded body obtained by bonding a base material A that is a member to be fitted having a portion to be fitted, and a base material B that is a fitting member having a fitting portion to be fitted to the portion to be fitted of the member to be fitted, via an adhesive layer,
in which the adhesive layer is formed by disposing a solid bonding agent containing an amorphous thermoplastic resin that is at least one type selected from a thermoplastic epoxy resin and a phenoxy resin, and has an epoxy equivalent of 1,600 or more and a heat of fusion of 15 J/g or less, between the base material A and the base material B, melting the solid bonding agent by heating and pressurizing, and solidifying the solid bonding agent.

[10] The bonded body according to [9], in which the heating and pressurizing are performed under conditions of 100°C to 400°C and 0.01 to 20 MPa.

Advantageous Effects of Invention

According to the present invention, it is possible to provide a bonding technique that is short in bonding process time, long in open time, and excellent in adhesiveness, with regard to a technique of bonding a member to be fitted having a portion to be fitted and a fitting member having a fitting portion to be fitted to the portion to be fitted of the member to be fitted.

Brief Description of Drawings

[Fig. 1] Fig. 1 is a cross-sectional view showing a configuration of a bonded body in one embodiment of the present invention.
[Fig. 2] Fig. 2 is a cross-sectional view showing a configuration of a bonded body in another embodiment of the present invention.

Description of Embodiments

[Method for Producing Bonded Body _ Embodiment 1]

A method for producing a bonded body of Embodiment 1 includes a pre-bonding step in which a laminate is prepared by arranging, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted; and a bonding step in which the laminate is heated and pressurized to melt the solid bonding agent and bond the base material A and the base material B.

In the pre-bonding step, bonding between the base material A and the solid bonding agent and bonding between the base material B and the solid bonding agent are not performed, and bonding is performed in the next bonding step. The solid bonding agent may have tackiness, and in this case, the solid bonding agent is temporarily fixed to the base material in the pre-bonding step.

The shape of the base material A, which is the member to be fitted, and the shape of the base material B, which is the fitting member, are not particularly limited, and are preferably cylindrical from the viewpoint of ease of fitting and ease of processing.

The shape may be such that the outer diameter of the portion to be fitted becomes smaller toward the tip end and the inner diameter of the fitting portion becomes larger toward the tip end.

The portion to be fitted may be a concave portion, and the fitting portion may be a convex portion.

It is preferable that the total of the inner diameter of the fitting portion and the thickness of the solid bonding agent is equal to or smaller than the outer diameter of the portion to be fitted. By heating the base material B, the inner diameter of the fitting portion is increased, and the portion to be fitted can be easily inserted, and after cooling, the inner diameter of the fitting portion is reduced, and firm bonding is achieved.

The base material which is the member to be fitted having the portion to be fitted is preferably made of a metal or a resin, and the base material which is the fitting member having the fitting portion is preferably made of a metal.

Examples of the metal include aluminum, iron, titanium, magnesium, stainless steel, and copper. Among these, aluminum is particularly suitably used from the viewpoint of lightness, ease of processing, and the like. In the present disclosure, the term "aluminum" is used to include aluminum and alloys thereof. Similarly, iron, titanium, magnesium, and copper are also used to include simple substances thereof and alloys thereof.

The resin is not particularly limited, and may be a general synthetic resin. Examples thereof include resins used for automobile parts such as a polycarbonate resin, a polyester resin, a polybutylene terephthalate resin, and a polyetherimide resin. Examples thereof also include carbon fiber-reinforced resins (CFRP) such as sheet molding compounds (SMC) using carbon fibers and press molded object such as bulk molding compounds (BMC), and glass fiber-reinforced resins (GFRP).

Each step will be described below.

<Pre-Bonding Step>

In the pre-bonding step, a laminate is prepared by arranging a base material A, a solid bonding agent containing an amorphous thermoplastic resin which is at least one selected from a thermoplastic epoxy resin and a phenoxy resin, and a base material B in this order.

The laminate is formed by superposing independent members without bonding any of the base material A and the solid bonding agent and the solid bonding agent and the base material B.

The term "solid" of the solid bonding agent means that the solid bonding agent is solid at ordinary temperature, that is, the solid bonding agent has no fluidity in a state where pressure is not applied at 23°C.

It is desirable that the solid bonding agent has such a property that the solid bonding agent can retain its outer shape without deformation for 30 days or more in a state where pressure is not applied at 23°C, and further, the solid bonding agent does not change in quality.

(Solid Bonding Agent)

The solid bonding agent includes an amorphous thermoplastic resin which is at least one selected from a thermoplastic epoxy resin and a phenoxy resin, has an epoxy equivalent of 1,600 or more, and a heat of fusion of 15 J/g or less.

The amorphous resin in the present invention is a resin having a melting point (Tm) but having no or very small endothermic peak (melting point) associated with clear melting in measurement using a differential scanning calorimeter (DSC). The heat of fusion is calculated from the area of the endothermic peak of DSC and the weight of the thermoplastic resin component. When an inorganic filler or the like is contained in the solid bonding agent, the heat of fusion is calculated from the weight of the resin component excluding the inorganic filler. Specifically, the amorphous thermoplastic resins in the present invention refer to the following. A sample is weighed in an amount of 2 to 10 mg, placed in an aluminum pan, and the temperature is increased from 23°C to 200°C or higher at a rate of 10°C/min using a DSC (DSC8231, manufactured by Rigaku Corporation) to obtain a DSC curve. Next, the heat of fusion is calculated from the area of the endothermic peak at the time of melting obtained from the DSC curve and the above-mentioned weighed value, and the resin having a heat of fusion of 15 J/g or less is selected.

From the viewpoint of sufficiently imparting the characteristics of the amorphous thermoplastic resin to the solid bonding agent, the content of the amorphous thermoplastic resin is preferably 51% by mass or more, more preferably 60% by mass or more, still more preferably 70% by mass or more, particularly preferably 80% by mass or more, and most preferably 90% by mass or more of the resin component in the solid bonding agent. In the present disclosure, the "resin component in the solid thermally conductive material" means a component other than the filler in the solid thermally conductive material.

The heat of fusion is 15 J/g or less, preferably 11 J/g or less, more preferably 7 J/g or less, still more preferably 4 J/g or less, and it is most preferable that the melting peak is equal to or lower than the detection limit.

The epoxy equivalent is 1,600 or more, preferably 2,000 or more, more preferably 5,000 or more, and still more preferably 9,000 or more, and it is most preferable that the epoxy equivalent is equal to or higher than the detection limit and the epoxy group is not substantially detected.

By using a solid bonding agent containing an amorphous thermoplastic resin having an epoxy equivalent of 1,600 or more and a heat of fusion of 15 J/g or less, a rapid decrease in viscosity as seen in a conventional hot-melt adhesive does not occur during heating, and a low viscosity (0.001 to 100 Pa·s) state is not reached even in a high temperature region of higher than 200°C. Therefore, the solid bonding agent does not flow out from a laminated body even in a molten state, and the thickness of the adhesive layer can be stably ensured, and a high adhesive force can be stably obtained.

The epoxy equivalent (the weight of the resin containing 1 mol of epoxy group) referred to herein is a value of the epoxy equivalent of the thermoplastic epoxy resin or phenoxy resin component contained in the solid bonding agent before bonding, and is a value (unit "g/eq.") measured by a method specified in JIS-K 7236:2001. Specifically, the epoxy equivalent is a value obtained by using a potentiometric titration device, using cyclohexanone as a solvent, adding a brominated tetraethylammonium acetic acid solution, using a 0.1 mol/L perchloric acid-acetic acid solution, and calculating a numerical value of a solvent diluted product (resin varnish) as a value in terms of a solid content from a nonvolatile component. In the case of a mixture of two or more resins, the epoxy equivalent can also be calculated from the content of each resin and the epoxy equivalent.

The melting point of the amorphous thermoplastic resin contained in the solid bonding agent is preferably 50°C to 400°C, more preferably 60°C to 350°C, and still more preferably 70°C to 300°C. When the melting point is in the range of 50°C to 400°C, the solid bonding agent is efficiently deformed and melted by heating and effectively wets and spreads on the adhesion surface, so that a high adhesive force is obtained.

In the description herein, the melting point of the amorphous thermoplastic resin means a temperature range of a process in which the amorphous thermoplastic resin is substantially softened from a solid state, becomes thermoplastic, and can be melted and adhered.

The conventional heat-curable adhesive has problems that it is difficult to disassemble the bonded body, it is difficult to separate and recycle dissimilar materials constituting the bonded body (i.e., poor in recycling property), and it is difficult to reattach the bonded body when the bonding portion is displaced in the production process of the bonded body or when the contents or the adherend has a defect and needs to be replaced (i.e., poor in repairing property), thus lacking convenience. However, the solid bonding agent can be softened and melted by heat and can be easily peeled off, so it has excellent recycling property. **In** addition, since the solid bonding agent is thermoplastic, it can be reversibly softened, melted, and cured repeatedly, and is also excellent in repairing property.

<<Thermoplastic Epoxy Resin>>

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer proceeds preferentially, and a thermoplastic epoxy resin having desired properties can be obtained.

The bifunctional epoxy resin monomer or oligomer (a) refers to an epoxy resin monomer or oligomer having two epoxy groups in the molecule.

Specific examples of the component (a) include bisphenol A type epoxy resins, bisphenol F type epoxy resins, bifunctional phenol novolac type epoxy resins, bisphenol AD type epoxy resins, biphenyl type epoxy resins, bifunctional naphthalene type epoxy resins, bifunctional alicyclic epoxy resins, bifunctional glycidyl ester type epoxy resins (e.g., diglycidyl phthalate, diglycidyl tetrahydrophthalate, dimer acid diglycidyl ester), bifunctional glycidylamine type epoxy resins (e.g., diglycidyl aniline, diglycidyl toluidine), bifunctional heterocyclic epoxy resins, bifunctional diarylsulfone type epoxy resins, hydroquinone type epoxy resins (e.g., hydroquinone diglycidyl ether, 2,5-di-tert-butylhydroquinone diglycidyl ether, resorcin diglycidyl ether), bifunctional alkylene glycidyl ether-based compounds (e.g., butanediol diglycidyl ether, butenediol diglycidyl ether, butynediol diglycidyl ether), bifunctional glycidyl group-containing hydantoin compounds (e.g., 1,3-diglycidyl-5,5-dialkylhydantoin, 1-glycidyl-3-(glycidoxyalkyl)-5,5-dialkylhydantoin), bifunctional glycidyl group-containing siloxanes (e.g., 1,3-bis(3-glycidoxypropyl)-1,1,3,3-tetramethyldisiloxane, $\alpha,\beta$-bis(3-glycidoxypropyl) polydimethylsiloxane), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group of the component (b) include mononuclear aromatic dihydroxy compounds having one benzene ring, such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds into which an allyl group is introduced, such as diallyl resorcin, diallyl bisphenol A, and triallyl dihydroxybiphenyl; and dibutyl bisphenol A.

Specific examples of the carboxyl group-containing compound of the component (b) include adipic acid, succinic acid, malonic acid, cyclohexanedicarboxylic acid, phthalic acid, isophthalic acid, and terephthalic acid.

Examples of the mercapto group-containing bifunctional compound of the component (b) include ethylene glycol bisthioglycolate and ethylene glycol bisthiopropionate.

Specific examples of the bifunctional compound having an isocyanate group of the component (b) include diphenylmethane diisocyanate (MDI), isophorone diisocyanate (IPDI), hexamethylene diisocyanate (HMDI), and tolylene diisocyanate (TDI).

Specific examples of the cyanate ester group-containing bifunctional compound of the component (b) include 2,2-bis(4-cyanatophenyl)propane, 1,1-bis(4-cyanatophenyl)ethane, and bis(4-cyanatophenyl)methane.

Among the compounds of the component (b), a bifunctional compound having a phenolic hydroxy group is preferred from the viewpoint of obtaining a polymer having thermoplasticity, a bifunctional compound having two phenolic hydroxy groups and having a bisphenol structure or a biphenyl structure is preferred from the viewpoint of heat resistance and adhesiveness, and bisphenol A, bisphenol F or bisphenol S is preferred from the viewpoint of heat resistance and cost.

When the component (a) is a bisphenol A type epoxy resin, a bisphenol F type epoxy resin, a bisphenol S type epoxy resin, or a biphenyl type epoxy resin and the component (b) is bisphenol A, bisphenol F, or bisphenol S, the polymer obtained by polymerization of the component (a) and the component (b) has a structure which has a paraphenylene structure and an ether bond as a main skeleton, a main chain formed by connecting the para-phenylene structure and the ether bond with an alkylene group, and a hydroxy group generated by polyaddition and arranged in a side chain.

The linear structure composed of the paraphenylene skeleton can increase the mechanical strength of the polymer after polymerization, and the arranged hydroxy group in the side chain can improve the adhesion to the base materials. As a result, a high adhesive strength can be realized while maintaining the workability of the thermosetting resin. Further, in the case of a thermoplastic resin, recycling and repairing become possible by softening and melting the resin with heat, and recycling property and repairing property, which are problems in a thermosetting resin, can be improved.

<<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of a direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among them, bisphenol A, bisphenol F, and bisphenol S are preferable from the viewpoints of cost, adhesiveness, viscosity, and heat resistance. One kind thereof may be used singly, or two or more kinds thereof may be used in combination.

The phenoxy resin has a chemical structure similar to that of the epoxy resin, and has a structure which has a para-phenylene structure and an ether bond as a main skeleton, a main chain formed by connecting the para-phenylene structure and the ether bond, and a hydroxy group arranged in a side chain.

<<Physical Properties of Thermoplastic Epoxy Resin and Phenoxy Resin>>

The thermoplastic epoxy resin and phenoxy resin preferably have a weight-average molecular weight of 10,000 to 500,000, more preferably 18,000 to 300,000, and still more preferably 20,000 to 200,000, which is a value in terms of polystyrene as measured by gel permeation chromatography (GPC). The weight-average molecular weight is calculated from an elution peak position detected by GPC, and is a value of a molecular weight in terms of standard polystyrene. When the weight-average molecular weight is within this value range, the balance between thermoplasticity and heat resistance is good, a bonded body is efficiently obtained by melting, and the heat resistance thereof is also high. When the weight-average molecular weight is 10,000 or more, the heat resistance is excellent, and when the weight-average molecular weight is 500,000 or less, the viscosity at the time of melting is low, and the adhesiveness is high.

<<Components other than Resin Component in Solid Bonding Agent>>

If necessary, the solid bonding agent may contain a filler or an additive as a component other than the resin component as long as the object of the present invention is not impaired.

Examples of the filler include an inorganic filler and an organic filler (resin powder).

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

In a case where the solid bonding agent contains a filler, the content of the filler in 100% by volume of the total amount of the solid bonding agent is preferably 50% by volume or less, more preferably 30% by volume or less, still more preferably 20% by volume or less, and most preferably 10% by volume or less.

The content (% by volume) of the filler is determined from the charged amount at 25°C, and specifically, is calculated by the following (Formula 1) based on the specific gravity of the components other than the filler and the apparent specific gravity of the filler with respect to% by mass of the filler.

(Formula 1)

$$X = (MF/DF) \div (MF/DF + (100 - MF)/DR) \times 100\%$$

**In** (Formula 1),

X: content of filler (% by volume),
MF: charged amount of filler (% by mass),
DR: specific gravity when resin components are cured, and
DF: apparent specific gravity of filler.

Examples of the additive include an antifoaming agent, a coupling agent such as a silane coupling agent, and a pigment, and one or two or more of these may be contained.

The content of the additive in the solid bonding agent is preferably 10% by mass or less, more preferably 5% by mass or less, and still more preferably 1% by mass or less.

The content of the resin component in the solid bonding agent is preferably 10% by mass or more, more preferably 20% by mass or more, still more preferably 30% by mass or more, even more preferably 50% by mass or more, and in one aspect, 80% by mass or more, in another aspect, 90% by mass or more, and in another aspect, 99% by mass or more.

<<Method for Producing Solid Bonding Agent>>

The method for producing the solid bonding agent is not particularly limited, but the solid bonding agent is obtained, for example, by heating and polymerizing a monomer or oligomer of a bifunctional epoxy compound. During the polymerization, a solvent may be added to reduce the viscosity and facilitate stirring. **In** the case of adding a solvent, it is necessary to remove the solvent, and a solid bonding agent may be obtained by performing drying or polymerization or both of them on a release film or the like.

Examples of the additive include a viscosity modifier, an inorganic filler, an organic filler (resin powder), an antifoaming agent, a coupling agent such as a silane coupling agent, and a pigment, and these can be used alone or in combination of two or more kinds thereof.

As the viscosity modifier, for example, a reactive diluent can be used.

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

The solid bonding agent thus obtained has excellent storage stability and can be stored at ordinary temperature for a long period of time because the content of unreacted monomers and terminal epoxy groups is small or substantially zero.

The form of the solid bonding agent is not particularly limited, and preferably has any shape selected from the group consisting of a film, a rod, a pellet, and a powder. In particular, at least one side of the outer shape is preferably 5 mm or less, more preferably 3 mm or less, still more preferably 1 mm or less, even more preferably 0.5 mm or less, and most preferably 0.3 mm or less. When the size is in such a range, it can be sandwiched between the base material A and the base material B and efficiently spread on the adhesion surface by heating and pressurization, and a high adhesive force can be obtained.

The solid bonding agent may have tackiness within a range that does not impair the adhesive force and the heat resistance thereof. In this case, the solid bonding agent is temporarily fixed to the base material in the laminated body preparation step.

<Bonding Step>

In the bonding step, the laminated body is heated and pressurized to melt the solid bonding agent, and then the temperature is lowered to solidify the solid bonding agent, thereby bonding the base material A and the base material B.
The temperature in the heating and pressurizing is preferably 100°C to 400°C, more preferably 120°C to 350°C, and still more preferably 150°C to 300°C. By heating at 100°C to 400°C, the solid bonding agent is efficiently deformed and melted, and is effectively wet and spread on the adhesion surface, so that a high adhesive force is obtained.
Since the amorphous thermoplastic resin contained in the solid bonding agent has a low cohesive force in the resin and has a hydroxy group, the amorphous thermoplastic resin has a strong interaction with the base material and can bond dissimilar materials with a higher adhesive force than that of a conventional crystalline hot-melt adhesive.
The bonding of the base material A and the base material B utilizes a phase change (solid to liquid to solid) of the solid bonding agent, and does not involve a chemical reaction, and therefore, the bonding can be completed in a shorter time than with a conventional thermosetting epoxy resin.

[Method for Producing Bonded Body _ Embodiment 2]

A method for producing a bonded body according to the present embodiment is a method for producing a bonded body obtained by bonding, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted, or a method for producing a bonded body obtained by bonding, in the following order, a base material A that is a fitting member having a fitting portion to be fitted to a portion to be fitted of the member to be fitted, a solid bonding agent containing an amorphous thermoplastic resin that is at least one type selected from a thermoplastic epoxy resin and a phenoxy resin, and a base material B that is a member to be fitted having a portion to be fitted, the method including: a first bonding step for bonding the base material A and the solid bonding agent by melting and then solidifying the solid bonding agent in a state in which the solid bonding agent is brought into surface contact with the base material A; and a second bonding step for bonding the base material A and the base material B by melting and then solidifying the solid bonding agent in a state in which the solid bonding agent bonded to the base material A is brought into surface contact with the base material B.
The base material which is the member to be fitted having the portion to be fitted is preferably made of a metal or a resin, and the base material which is the fitting member having the fitting portion is preferably made of a metal. Examples of the metal and the resin are the same as those in Embodiment 1.
According to the production method, the bonding of the base material A and the base material B utilizes a phase change (solid to liquid to solid) of a solid bonding agent containing an amorphous thermoplastic resin which is at least one selected from a thermoplastic epoxy resin and a phenoxy resin, and does not involve a chemical reaction, so that the bonding can be completed in a shorter time than with a conventional thermosetting epoxy resin, and the open time is also long. In addition, since the thermoplastic epoxy resin and the phenoxy resin have a low cohesive force in the resins and have a hydroxy group, they interact strongly with the base material, and can bond dissimilar materials with a higher bonding force than conventional crystalline hot-melt adhesives.
In addition, in the production method, the bonding is performed by dividing the steps into a first bonding step and a second bonding step. By dividing the steps in this way, bonding can be performed by heating at a temperature suitable for the bonding interface, and a bonded body having excellent bonding property can be produced. In addition, heating temperature control is also easier than in a case where the steps are not divided. Furthermore, by bonding the solid bonding agent to the base material A in advance, the base material A and the base material B can be accurately bonded to each other, and it is possible to suppress the occurrence of deviation in the bonded portion.

<First Bonding Step>

The first bonding step is a step of bonding the base material A and the solid bonding agent by melting and then solidifying the solid bonding agent in a state in which the solid bonding agent is brought into surface contact with the base material A.
In the first bonding step, the base material A and the base material B can be bonded with high accuracy by bonding the base material A and the solid bonding agent in advance.
In the description herein, the term "solidification" means that the material is solid at ordinary temperature, that is, the material does not have fluidity at 23°C in a non-pressurized state. However, the solid bonding agent after the first bonding step may have tackiness.

Examples of the method for melting the solid bonding agent include at least one method selected from the group consisting of contact heating, warm air heating, hot press, hot plate welding, infrared heating, ultrasonic welding, vibration welding, and high-frequency induction welding. Among these, infrared heating is preferable from the viewpoint of ease of production and shortening of the bonding process.

In a case where the solid bonding agent is melted by heating, the temperature of the bonding surface of the base material A with the solid bonding agent is preferably heated to 100°C to 300°C and melted, more preferably 120°C to 250°C, and still more preferably 150°C to 220°C. By heating to 100°C to 300°C, the solid bonding agent is efficiently deformed and melted and effectively wets and spreads on the bonding surface, whereby a high bonding force is obtained.

Examples of the method for solidifying the molten solid bonding agent include a method in which the solid bonding agent is allowed to cool at ordinary temperature and a method in which the solid bonding agent is allowed to cool using a cooling device. The term "ordinary temperature" means a general room temperature within a range of 5°C to 30°C. Among these, a method in which the solid bonding agent is allowed to cool at ordinary temperature is preferable from the viewpoint of ease of production.

(Solid Bonding Agent)

The solid bonding agent is the same as in Embodiment 1 above, but the solid bonding agent in the present embodiment is preferably a film. In the present disclosure, the film means a sheet-shaped material having a thickness of 10 $\mu$m to 3 mm.

<<Form of Film>>

The thickness of the film is preferably 1 mm or less, more preferably 0.5 mm or less, still more preferably 0.3 mm or less, even more preferably 0.2 mm or less, and most preferably 0.1 mm or less, from the viewpoint of obtaining a bonded body having excellent bonding property in a short bonding process time.

When the size is in such a range, it can be sandwiched between the base material A and the base material B and efficiently spread on the bonding surface by heating, pressurization or the like, and a high bonding force can be obtained.

The film may be a single layer or a laminated body including a plurality of layers, and is preferably a single layer from the viewpoint of ease of production and improvement of bonding force.

In addition, the film may have tackiness to the extent that the bonding force and the heat resistance thereof are not impaired.

<<Method for Producing Film>>

The method for producing the film is not particularly limited, and for example, a resin composition is obtained by heating and polymerizing a monomer or oligomer of a bifunctional epoxy compound, a solvent is added to the obtained resin composition as necessary, the composition is applied to a release film or the like, cured and dried, and pressurized as necessary to obtain a film.

<Second Bonding Step>

The second bonding step is a step of bonding the base material A and the base material B by melting and then solidifying the solid bonding agent in a state in which the solid bonding agent bonded to the base material A is brought into surface contact with the base material B.

From the viewpoint of obtaining a high bonding force, in the second bonding step, it is preferable to melt and then solidify the solid bonding agent by heating at a temperature equal to or higher than the melting point of at least one of the base material B and the solid bonding agent. By heating at a temperature equal to or higher than the melting point of at least one of the base material B and the film, the film and the base material are compatibilized, and a stronger bonding force is easily obtained.

Examples of the method for melting the solid bonding agent include at least one method selected from the group consisting of contact heating, warm air heating, hot press, infrared heating, hot plate welding, ultrasonic welding, vibration welding, and high-frequency induction welding. Among these, hot press, ultrasonic welding, and high-frequency induction welding are preferable.

There are no particular limitations on the conditions under which shrink-fitting is performed.

For example, the temperature is preferably 100°C to 400°C, more preferably 120°C to 350°C, and still more preferably 150°C to 300°C. By heating to 100°C to 400°C, the solid bonding agent is efficiently deformed and melted and effectively wets and spreads on the bonding surface, whereby a high bonding force is obtained.

The conditions for performing high-frequency induction welding are not particularly limited.

For example, the transmission frequency is preferably 0.1 to 3 MHz, and more preferably 0.5 to 2 MHz.

The high-frequency application time is preferably 0.1 to 120 seconds, and more preferably 1 to 60 seconds from the viewpoint of adhesiveness and appearance.

In a case where the base material A and the base material B are pressurized at the time of high-frequency application, the pressurizing force is preferably 0.01 to 20 MPa, more preferably 0.1 to 10 MPa, and still more preferably 0.2 to 5 MPa. When the pressure is in such a range, the solid bonding agent is efficiently deformed to effectively wet and spread on the adhesion surface, so that a high adhesive force can be obtained.

The conditions for performing high-frequency induction welding are not particularly limited.

For example, the output may be in a range of 100 to 10000 W.

As described above, the bonding of the base material A and the base material B utilizes a phase change (solid to liquid to solid) of the solid bonding agent, and does not involve a chemical reaction, and therefore, the bonding can be completed in a shorter time than with a conventional thermosetting epoxy resin.

[Bonded Body]

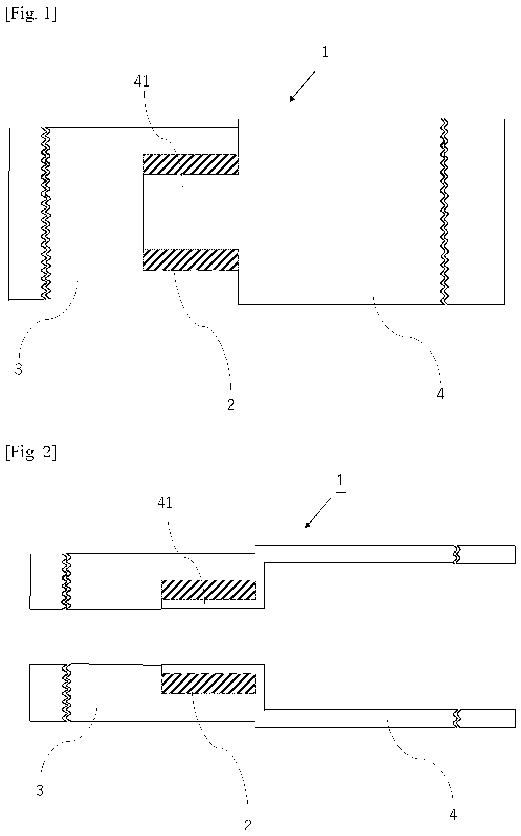

The bonded body of the present invention may be a bonded body of solid rods as shown in Fig. 1, or a bonded body of hollow pipes as shown in Fig. 2. Alternatively, the bonded body may be a bonded body of a solid rod and a hollow pipe.

In a bonded body 1 shown in Figs. 1 and 2, a base material A which is a member to be fitted 3 having a portion to be fitted and a base material B which is a fitting member 4 having a fitting portion 41 to be fitted to the portion to be fitted of the member to be fitted are bonded and integrated via a bonding layer 2 obtained by melting and then solidifying a solid bonding agent containing an amorphous thermoplastic resin which is at least one kind selected from a thermoplastic epoxy resin and a phenoxy resin.

The bonded body of the present invention exhibits excellent bonding strength even when it is a bonded body of dissimilar materials. Since the bonding strength is affected by a large number of factors such as the thickness of the bonding layer, the molecular weight and chemical structure of the polymer constituting the solid bonding agent, mechanical properties, and viscoelastic properties, in addition to the strength of the interfacial interaction acting between the bonding layer and the base material A and between the bonding layer and the base material B, the details of the mechanism by which the bonded body of the present invention exhibits excellent bonding strength are not clear, but it is presumed that the main factors are that the cohesive force in the amorphous thermoplastic resin constituting the bonding layer 2 is low, and a hydroxy group is present in the resin to form a chemical bond or an intermolecular force such as a hydrogen bond or a van der Waals force at the interface between the bonding layer and the base material A and the interface between the bonding layer and the base material B. However, in the bonded body, the state or characteristic of the interface of the bonded body is a very thin chemical structure of a nanometer level or less and is difficult to analyze, and it is impossible or impractical in the current technology to express the state or characteristic by specifying the state or characteristic so as to distinguish the state or characteristic from a state or characteristic that does not depend on the use of a solid bonding agent.

The bonded body of the present invention in which the bonding layer is made of a thermoplastic resin is excellent in recycling property and repairing property, and can be easily disassembled into the base material A and the base material B by heating the bonded body.

The base material which is the member to be fitted having the portion to be fitted is preferably made of a metal or a resin, and the base material which is the fitting member having the fitting portion is preferably made of a metal.

Examples of the metal include aluminum, iron, titanium, magnesium, stainless steel, and copper. Among these, aluminum is particularly suitably used from the viewpoint of lightness, ease of processing, and the like. In the present disclosure, the term "aluminum" is used to include aluminum and alloys thereof. Similarly, iron, titanium, magnesium, and copper are also used to include simple substances thereof and alloys thereof.

The resin is not particularly limited, and may be a general synthetic resin. Examples thereof include resins used for automobile parts such as a polycarbonate resin, a polyester resin, a polybutylene terephthalate resin, and a polyetherimide resin. Examples thereof also include carbon fiber-reinforced resins (CFRP) such as sheet molding compounds (SMC) using carbon fibers and press molded object such as bulk molding compounds (BMC), and glass fiber-reinforced resins (GFRP).

A high adhesive force may be obtained by subjecting the base material A and the base material B to a pretreatment suitable for each base material.

Examples of the pretreatment include a pretreatment in which the surface of the base material is washed and a pretreatment of imparting unevenness to the surface of the base material. Specific examples of the pretreatment include a degreasing treatment, a UV ozone treatment, a blast treatment, a polishing treatment, a plasma treatment, a corona discharge treatment, a laser treatment, an etching treatment, and a flame treatment. One kind of the pretreatment may be carried out alone, or two or more kinds thereof may be carried out. Known methods can be used as specific methods for these pretreatments.

The degreasing treatment is a method of removing stains such as fats and oils on the surface of the base material by dissolving them with an organic solvent such as acetone or toluene.

The UV ozone treatment is a method for cleaning and modifying a surface by the energy of ultraviolet rays with short wavelengths emitted from a low-pressure mercury lamp and the power of ozone ($O_3$) generated thereby. In a case of glass, the UV ozone treatment is one surface cleaning method for removing organic impurities on a surface. In general, a cleaned surface modifying device using a low-pressure mercury lamp is referred to as an "UV ozone cleaner", an "UV cleaning device", an "ultraviolet surface modifying device", and the like.

Examples of the blast treatment include a wet blast treatment, a shot blast treatment, and a sand blast treatment. Among these, the wet blast treatment is preferable because a denser surface can be obtained compared to the dry blast treatment.

Examples of the polishing treatment include buffing using a polishing cloth, roll polishing using polishing paper (sandpaper), and electrolytic polishing.

The plasma treatment creates a plasma beam with a high-voltage power supply and a rod and causes the plasma beam to impinge on a material surface to excite molecules and functionalize the molecules, and includes an atmospheric pressure plasma treatment method capable of imparting hydroxy groups or polar groups onto a material surface, for example.

The corona discharge treatment includes a method applied for surface modification of a polymer film and is a method for generating hydroxy groups or polar groups on a surface, beginning at radicals generated by cutting, with electrons emitted from an electrode, polymer main chains or side chains on a polymer surface layer.

The laser treatment is a technique of rapidly heating and cooling only the surface of the base material by laser irradiation to improve the characteristics of the surface, and is an effective method for roughening the surface. Known laser treatment techniques can be used.

Examples of the etching treatment include chemical etching treatments such as an alkali method, a phosphoric acid-sulfuric acid method, a fluoride method, a chromic acid-sulfuric acid method, and an iron chloride method, and electrochemical etching treatments such as an electrolytic etching method.

The flame treatment is a method in which a mixed gas of a combustion gas and air is burned to convert oxygen in the air into plasma, and the oxygen plasma is applied to an object to be treated to make the surface hydrophilic. Known flame treatment techniques can be used.

Examples

Next, specific examples of the present invention will be described, but the present invention is not particularly limited to these Examples. In the following examples, the base material A and the base material B are collectively referred to as bonding base materials.

<Bonding Base Materials>

The following bonding base materials were used.

Base material A:

<<Iron>> A solid rod of S45C having an outer diameter of 20 mm and a length of 140 mm was used as a test piece. The fitting portion was subjected to blasting.
<<Aluminum>> A solid rod of A6061-T6 having an outer diameter of 20 mm and a length of 140 mm was used as a test piece. The fitting portion was subjected to blasting.

Base material B:

<<Iron>> A hollow pipe of S35C having an inner diameter of 19 mm, a thickness of 4.9 mm, and a length of 140 mm was used as a test piece. The inner diameter portion was wiped with methyl ethyl ketone and defatted before use.

<Weight-Average Molecular Weight, Heat of Fusion, and Epoxy Equivalent of Thermoplastic Epoxy Resin and Phenoxy Resin>

The weight-average molecular weight, the heat of fusion, and the epoxy equivalent of the solid bonding agent were determined as follows.

(Weight-average molecular weight)

The thermoplastic epoxy resin and the phenoxy resin were dissolved in tetrahydrofuran, and measurement was performed under the following conditions using Prominence 501 (manufactured by Showa Science Co., Ltd., Detector: Shodex (registered trademark) RI-501 (manufactured by Resonac Corporation)).

Column: LF-804 (manufactured by Resonac Corporation) $\times$ 2
Column temperature: 40°C
Sample: 0.4% by mass tetrahydrofuran solution of resin
Flow rate: 1 mL/min
Eluent: tetrahydrofuran
Calibration method: standard polystyrene conversion

(Heat of fusion)

Two to ten mg of each of the thermoplastic epoxy resin and the phenoxy resin were weighed, placed in an aluminum pan, and the temperature was increased from 23°C to 200°C at a rate of 10°C/min using a DSC (DSC8231 manufactured by Rigaku Corporation), thereby obtaining a DSC curve. The heat of fusion was calculated from the area of the endothermic peak at the time of melting of the DSC curve and the above weighed value.

(Epoxy equivalent)

The epoxy equivalent was measured in accordance with JIS K-7236:2001 and converted into a value as a resin solid content. In the case of a simple mixture that does not involve a reaction, the epoxy equivalent was calculated from each epoxy equivalent and content.

<Example 1>

(Solid bonding agent P-1)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, weight-average molecular weight: about 10,000), 1.0 equivalent (12.5 g) of bisphenol S, 2.4 g of triphenylphosphine, and 1,000 g of methyl ethyl ketone, and the temperature was increased to 100°C while stirring in a nitrogen atmosphere. Completion of dissolution was visually confirmed, and the mixture was cooled to 40°C to obtain a solid. A non-adhesive fluororesin film (NITOFLON (registered trademark) No. 900UL, manufactured by Nitto Denko Corporation) was installed on the upper plate and the lower plate of a press machine, the above-described solid was disposed on the non-adhesive fluororesin film of the lower plate, then the press machine was heated to 160°C, and the resin composition was heated and compressed for 2 hours to obtain a resin composition having a solid content of about 20% by mass. The solvent was removed therefrom to obtain a film-shaped solid bonding agent (P-1) having a solid content of 100% by mass and a thickness of 100 $\mu$m. The weight-average molecular weight was about 37,000. The epoxy equivalent was equal to or higher than the detection limit. No heat of fusion peak was detected in DSC.

(Bonded body)

The following two types of bonded bodies were produced.
In addition, for open time evaluation, a bonded body for open time evaluation was also produced in the same manner as in <<Iron-Iron>> below, except that a solid bonding agent was disposed on the iron base material (base material A), the solid bonding agent was allowed to stand for three days, and then the iron base material (base material B) was fitted thereto.

<<Iron-Iron>>

The solid bonding agent P-1 cut in a width of 70 mm was wound on the iron base material as the base material A, and then the base material A was inserted into the inner diameter of the iron base material B heated to 350°C. The overlap between these base materials was 65 mm. Thereafter, these base materials were allowed to cool to obtain a bonded body. The solid bonding agent P-1 was disposed so as to cover the entire overlapping region of the base materials. That is, an unbonded laminated body was prepared in a state in which the base material A and the base material B were not in direct contact with each other and the solid bonding agent was interposed therebetween.

<<Aluminum-Iron>>

A bonded body was obtained in the same manner as in the above-mentioned <<Iron-Iron>> bonded body except that the above-mentioned aluminum base material was used as the base material A.

<Example 2>

(Solid bonding agent P-2)

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight-average molecular weight: about 50,000) and 80 g of cyclohexanone were charged, the temperature was increased to 60°C while stirring, completion of dissolution was visually confirmed, and the mixture was cooled to 40°C, thereby obtaining a resin composition having a solid content of 20% by mass. The solvent was removed therefrom to obtain a solid. A non-adhesive fluororesin film (NITOFLON (registered trademark) No. 900UL, manufactured by Nitto Denko Corporation) was installed on the upper plate and the lower plate of a press machine, the above-described solid was disposed on the non-adhesive fluororesin film of the lower plate, then the press machine was heated to 160°C, and the resin composition was heated and compressed for 2 hours to obtain a film-shaped solid bonding agent (P-2) having a solid content of 100% by mass and a thickness of 100 $\mu$m. The weight-average molecular weight was 50,000, and the epoxy equivalent was equal to or higher than the detection limit. No heat of fusion peak was detected in DSC.

(Bonded body)

Two types of bonded bodies and a bonded body for open time evaluation were produced in the same manner as in Example 1 except that P-2 was used as the solid bonding agent.

<Example 3>

(Solid bonding agent P-3)

The resin composition P-2 and a crystalline epoxy resin YSLV-80XY (manufactured by NIPPON STEEL Chemical & Material Co., Ltd.) were mixed at a mass ratio of 98:2 to obtain a solid bonding agent (P-3). The weight-average molecular weight was 36,000, the epoxy equivalent was 9600 g/eq, and the heat of fusion was 2 J/g.

(Bonded body)

Two types of bonded bodies and a bonded body for open time evaluation were produced in the same manner as in Example 1 except that P-3 was used as the solid bonding agent.

<Example 4>

(Solid bonding agent P-4)

The resin composition P-2 and a crystalline epoxy resin YSLV-80XY (manufactured by NIPPON STEEL Chemical & Material Co., Ltd.) were mixed at a mass ratio of 94:6 to obtain a solid bonding agent (P-4). The weight-average molecular weight was 35,000, the epoxy equivalent was 2100 g/eq, and the heat of fusion was 4 J/g.

(Bonded body)

Two types of bonded bodies and a bonded body for open time evaluation were produced in the same manner as in Example 1 except that P-4 was used as the solid bonding agent.

<Example 5>

(Solid bonding agent P-5)

The resin composition P-2 and a crystalline epoxy resin YSLV-80XY (manufactured by NIPPON STEEL Chemical & Material Co., Ltd.) were mixed at a mass ratio of 89:11 to obtain a solid bonding agent (P-5). The weight-average molecular weight was 33,000, the epoxy equivalent was 1745 g/eq, and the heat of fusion was 11 J/g.

(Bonded body)

Two types of bonded bodies and a bonded body for open time evaluation were produced in the same manner as in Example 1 except that P-5 was used as the solid bonding agent.

<Example 6>

(Solid bonding agent P-6)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, molecular weight: about 4,060), 0.6 equivalents (12.5 g) of bisphenol S (molecular weight: 250), 2.4 g of triphenylphosphine, and 1,000 g of methyl ethyl ketone, and the temperature was increased to 100°C while stirring in a nitrogen atmosphere. Completion of dissolution was visually confirmed, and the mixture was cooled to 40°C to obtain a resin composition having a solid content of about 20% by mass. The solvent was removed therefrom to obtain a solid. A non-adhesive fluororesin film (NITOFLON (registered trademark) No. 900UL, manufactured by Nitto Denko Corporation) was installed on the upper plate and the lower plate of a press machine, the above-described solid was disposed on the non-adhesive fluororesin film of the lower plate, then the press machine was heated to 160°C, and the resin composition was heated and compressed for 2 hours to obtain a film-shaped solid bonding agent (P-6) having a solid content of 100% by mass and a thickness of 100 μm. The weight-average molecular weight was about 30,000, and the epoxy equivalent was equal to or higher than the detection limit. No heat of fusion peak was detected in DSC.

(Bonded body)

Two types of bonded bodies and a bonded body for open time evaluation were produced in the same manner as in Example 1 except that P-6 was used as the solid bonding agent.

<Example 7>

Two types of bonded bodies and a bonded body for open time evaluation were produced in the same manner as in Example 1 except that, in the production of the bonded body, the solid bonding agent P-1 was disposed on the base material A, the film was melted by heating to 200°C, and then allowed to cool at ordinary temperature for 1 minute to solidify the film, the base material A and the solid bonding material were bonded to each other, and then the base material B was bonded.

<Comparative Example 1>

(Solid bonding agent Q-1)

Two liquids of a thermosetting liquid epoxy adhesive E-250 (manufactured by KONISHI Co., Ltd., a two liquid type of a bisphenol-type epoxy resin and an amine curing agent) were mixed, applied to a release film, cured at 100°C for 1 hour, cooled, and peeled off from the release film to obtain a film-shaped solid bonding agent (Q-1) having a thickness of 100 μm. No heat of fusion peak was detected in DSC. The epoxy equivalent and the weight-average molecular weight could not be measured due to insolubility in the solvent.

(Bonded body)

Two types of bonded bodies and a bonded body for open time evaluation were produced in the same manner as in Example 1 except that Q-1 was used as the solid bonding agent.

<Comparative Example 2>

(Solid bonding agent Q-2)

An amorphous polycarbonate film (Iupilon (registered trademark) FE2000, manufactured by Mitsubishi Engineering-Plastics Corporation, thickness: 100 μm) was used as a solid bonded body Q-2. No heat of fusion peak was detected in DSC.

(Bonded body)

Two types of bonded bodies and a bonded body for open time evaluation were produced in the same manner as in Example 1 except that Q-2 was used as the solid bonding agent.

<Comparative Example 3>

(Solid bonding agent Q-3)

A crystalline epoxy resin YSLV-80XY (manufactured by NIPPON STEEL Chemical & Material Co., Ltd.) was used as a solid bonding agent (Q-3). The epoxy equivalent was 192 g/eq. The weight-average molecular weight was 340. The heat of fusion was 70 J/g.

(Bonded body)

Two types of bonded bodies and a bonded body for open time evaluation were produced in the same manner as in Example 1 except that Q-3 was used as the solid bonding agent.

<Comparative Example 4>

(Bonded body)

Two liquids of a thermosetting liquid epoxy adhesive E-250 (manufactured by KONISHI Co., Ltd., a two liquid type of a bisphenol-type epoxy resin and an amine curing agent) were mixed, and the mixture was applied to each of two types of base materials A similar to those in Example 1, inserted into a base material B heated to 350°C within 1 minute, and cooled to room temperature to prepare two types of bonded bodies.

In addition, a bonded body for open time evaluation was also produced in the same manner as in Example 1 except that the thermosetting liquid epoxy adhesive E-250 was applied to the base material A, and then the base material A was allowed to stand for 3 days, followed by bonding.

<Comparative Example 5>

A flask was charged with 1.0 equivalent (203 g) of jER (registered trademark) 1007 (manufactured by Mitsubishi Chemical Corporation, bisphenol A-type epoxy resin, weight-average molecular weight: about 10,000), 1.0 equivalent (12.5 g) of bisphenol S, 2.4 g of triphenylphosphine, and 1,000 g of methyl ethyl ketone, and the mixture was stirred at ordinary temperature to obtain a liquid resin composition having a solid content of about 20% by mass. The liquid resin composition was spray-coated on each of two types of base materials A similar to those in Example 1, dried at room temperature for 30 minutes, and then allowed to stand in an oven at 160°C for 2 hours to form a solid thermoplastic epoxy resin polymer coating layer having a thickness of 100 μm on the surface of the base material A. The weight-average molecular weight of the coating layer was about 40,000. The epoxy equivalent was equal to or higher than the detection limit. No heat of fusion peak was detected in DSC.

(Bonded body)

Two types of bonded bodies were produced in the same manner as in Example 1 except that the base material A having the coating layer was inserted into the base material B heated to 350°C.

In addition, for open time evaluation, a bonded body for open time evaluation was also produced in the same manner as in Example 1 except that the thermoplastic epoxy resin polymer coating layer was formed on the surface of the base material A, then allowed to stand for 3 days, and then bonded to the base material B.

<Comparative Example 6>

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight-average molecular weight: about 50,000) and 80 g of cyclohexanone were charged, the temperature was raised to 60°C while stirring, completion of dissolution was visually confirmed, and the mixture was cooled to 40°C, thereby obtaining a liquid resin composition having a solid content of 20% by mass. A phenoxy resin coating layer having a thickness of 100 $\mu$m was formed on the surface of the base material B by bar coating the liquid resin composition on each of three types of base materials B similar to those in Example 1, and allowing the resultant to stand in an oven at 70°C for 30 minutes. The weight-average molecular weight of the coating layer was about 50,000. The epoxy equivalent was equal to or higher than the detection limit. No heat of fusion peak was detected in DSC.

(Bonded body)

Two types of bonded bodies were produced in the same manner as in Example 1 except that the base material A was directly disposed on the base material B having the phenoxy resin coating layer.

In addition, for open time evaluation, a bonded body for open time evaluation was also produced in the same manner as in Example 1 except that the phenoxy resin coating layer was formed on the surface of the base material B, then allowed to stand for 3 days, and then laminated with the base material A.

<Comparative Example 7>

(Bonded body)

Two types of bonded bodies and a bonded body for open time evaluation were produced in the same manner as in Example 1, except that a crystalline polyamide-based hot-melt adhesive film NT-120 (manufactured by Nihon Matai Co., Ltd., thickness: 100 $\mu$m) was used as the solid bonding agent. The heat of fusion was 60 J/g.

[Shear Adhesive Force]

The bonded bodies obtained in Examples 1 to 7 and Comparative Examples 1 to 7 were allowed to stand at a measurement temperature (23°C or 80°C) for 30 minutes or more, and then a tensile strength test was performed in 23°C atmosphere using a tensile testing machine (universal testing machine Autograph "AG-X plus" (manufactured by Shimadzu Corporation); load cell 10 kN, tensile speed 10 mm/min) to measure the bonding strength. The measurement results are shown in Table 1-1 and Table 1-2.

[Bonding Process Time]

The bonding process time was measured as follows.

The bonding process time was measured from a start point to an end point, with the contact time between at least one of the base materials constituting the bonded body and the bonding agent as the start point and the completion time of the production of the bonded body as the end point. With respect to the heating and bonding time, the heating and bonding times of the two types of bonded bodies were averaged. The measurement results are shown in Table 1-1 and Table 1-2.

[Recycling Property]

The recycling property was determined by placing the bonded body in an oven at 200°C, heating the bonded body for 10 minutes, and then determining whether the bonded body could be easily detached with a force of 1 N or less. When the bonded body could be detached, it was evaluated as good (A), and when the bonded body could not be detached, it was evaluated as poor (B).

[Repairing Property]

After the tensile strength test at 23°C, the base material B of each of the test pieces of iron and iron in which the adhesion surface was broken (the layer of the bonded solid remained on the surface of the base material A or B, or both) was heated to 350°C, and the base material A was inserted to prepare a bonded body in the same manner as in Example 1, thereby obtaining a repaired bonded body. The tensile adhesive force of the repaired bonded body at 23°C was measured in the same manner as in the above-described test method, and a case where the tensile adhesive force was 80% or more of the shear adhesive force of the first time was evaluated as good (A), and a case where the tensile adhesive force was less than 80% of the shear adhesive force of the first time was evaluated as poor (B). The evaluation results are shown in Table 1-1 and Table 1-2.

[Open Time Evaluation]

Using the bonded body for open time evaluation, the tensile shear adhesive strength test was performed at 23°C. When the shear adhesive force was 80% or more as compared with the test pieces prepared by the methods of the above-described Examples and Comparative Examples, it was evaluated as good (A), and when it was less than 80%, it was evaluated as poor (B). When the open time evaluation is good (A), it means that the open time is long and the convenience is excellent. The evaluation results are shown in Table 1-1 and Table 1-2.

[Table 1-1]

Table 1-1

| | | | Example 1 | Example 2 | Example 3 | Example 4 |
|---|---|---|---|---|---|---|
| Properties of bonding agent | | Form of bonding agent | Film | Film | Film | Film |
| | | Resin main component | Thermoplastic epoxy resin | Phenoxy resin | Thermoplastic epoxy resin | Thermoplastic epoxy resin |
| | | Weight-average molecular weight | 37,000 | 50,000 | 36,000 | 35,000 |
| | | Heat of fusion [J/g] | No melting peak | No melting peak | 2 | 4 |
| | | Epoxy equivalent [g/eq] | Equal to or higher than detection limit | Equal to or higher than detection limit | 9,600 | 2,100 |
| Adhesive force | Iron (base material A)/iron (base material B) | 23°C tensile strength [kN] | 130 | 140 | 130 | 130 |
| | Aluminum (base material A)/iron (base material B) | 23°C tensile strength [kN] | 120 | 130 | 110 | 110 |

(continued)

| Convenience | | Example 1 | Example 2 | Example 3 | Example 4 |
|---|---|---|---|---|---|
| | Bonding process time | 5 min | 5 min | 5 min | 5 min |
| | Recycling property | A | A | A | A |
| | Repairing property | A | A | A | A |
| | Open time evaluation | A | A | A | A |

Table 1-1 (continued)

| | | Example 5 | Example 6 | Example 7 |
|---|---|---|---|---|
| Properties of bonding agent | Form of bonding agent | Film | Film | Film |
| | Resin main component | Thermoplastic epoxy resin | Thermoplastic epoxy resin | Thermoplastic epoxy resin |
| | Weight-average molecular weight | 33,000 | 30,000 | 37,000 |
| | Heat of fusion [J/g] | 11 | No melting peak | No melting peak |
| | Epoxy equivalent [g/eq] | 1,745 | Equal to or higher than detection limit | Equal to or higher than detection limit |
| Adhesive force | Iron (base material A)/iron (base material B) | 23°C tensile strength [kN] | 130 | 120 | 140 |
| | Aluminum (base material A)/iron (base material B) | 23°C tensile strength [kN] | 100 | 100 | 120 |
| Convenience | Bonding process time | 5 min | 5 min | 7 min |
| | Recycling property | A | A | A |
| | Repairing property | A | A | A |
| | Open time evaluation | A | A | A |

[Table 1-2]

EP 4 640 781 A1

Table 1-2

|  |  |  | Comparative Example 1 | Comparative Example 2 | Comparative Example 3 | Comparative Example 4 |
|---|---|---|---|---|---|---|
| Properties of bonding agent |  | Form of bonding agent | Film | Film | Film | Liquid |
|  |  | Resin main component | Thermosetting epoxy resin | Polycarbonate | Epoxy resin | Thermosetting epoxy resin |
|  |  | Weight-average molecular weight | - | - | 340 | - |
|  |  | Heat of fusion [J/g] | No melting peak | No melting peak | 70 | No melting peak |
|  |  | Epoxy equivalent [g/eq] | - | - | 192 | - |
| Adhesive force | Iron (base material A)/iron (base material B) | 23°C tensile strength [kN] | 50 | 60 | 2 | 40 |
|  | Aluminum (base material A)/iron (base material B) | 23°C tensile strength [kN] | 50 | 50 | 2 | 40 |
| Convenience | Bonding process time |  | 5 min | 5 min | 5 min | 70 min |
|  | Recycling property |  | B | A | A | B |
|  | Repairing property |  | B | A | A | B |
|  | Open time evaluation |  | B | A | A | B |

Table 1-2 (continued)

|  |  | Comparative Example 5 | Comparative Example 6 | Comparative Example 7 |
|---|---|---|---|---|
| Properties of bonding agent | Form of bonding agent | Coating layer | Coating layer | Film |
|  | Resin main component | Thermoplastic epoxy resin | Phenoxy resin | Polyamide |
|  | Weight-average molecular weight | 40,000 | 50,000 | - |
|  | Heat of fusion [J/g] | No melting peak | No melting peak | 60 |
|  | Epoxy equivalent [g/eq] | Equal to or higher than detection limit | Equal to or higher than detection limit | - |

20

(continued)

|  |  |  | Comparative Example 5 | Comparative Example 6 | Comparative Example 7 |
|---|---|---|---|---|---|
| Adhesive force | Iron (base material A)/iron (base material B) | 23°C tensile strength [kN] | 150 | 140 | 5 |
|  | Aluminum (base material A)/iron (base material B) | 23°C tensile strength [kN] | 110 | 110 | 5 |
| Convenience | Bonding process time | | 150 min | 35 min | 5 min |
|  | Recycling property | | A | A | A |
|  | Repairing property | | A | A | A |
|  | Open time evaluation | | A | A | A |

Industrial Applicability

The bonded body obtained by the production method of the present invention is used, for example, as automobile components, such as a door side panel, an engine hood roof, a tail gate, a steering hanger, an A-pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED headlamp, and as structural members of a smartphone, a laptop computer, a tablet personal computer, a smart watch, a large size liquid crystal display television set (LCD-TV), and an outdoor LED illumination, but are not particularly limited to these exemplified applications.

Reference Signs List

1: Bonded body

2: Adhesive layer

3: Member to be fitted

4: Fitting member

41: Fitting portion

**Claims**

1. A method for producing a bonded body, the method including:

a pre-bonding step in which a laminated body is prepared by arranging, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted; and
a bonding step in which the laminated body is heated and pressurized to melt the solid bonding agent and bond the base material A and the base material B,
wherein the amorphous thermoplastic resin has an epoxy equivalent of 1,600 or more or does not contain an epoxy group and has a heat of fusion of 15 J/g or less.

2. The method for producing a bonded body according to claim 1, wherein the member to be fitted is made of a metal or a resin, and the fitting member is made of a metal.

3. The method for producing a bonded body according to claim 1, wherein the fitting portion is heated to 100°C to 400°C and fitted.

4. A method for producing a bonded body obtained by bonding, in the following order, a base material A that is a member to be fitted having a portion to be fitted, a solid bonding agent containing an amorphous thermoplastic resin that is at least one type selected from a thermoplastic epoxy resin and a phenoxy resin, and a base material B that is a fitting member having a fitting portion to be fitted to the portion to be fitted of the member to be fitted, or a method for producing a bonded body obtained by bonding, in the following order, a base material A that is a fitting member having a fitting portion to be fitted to a portion to be fitted of a member to be fitted, a solid bonding agent containing an amorphous thermoplastic resin that is at least one type selected from a thermoplastic epoxy resin and a phenoxy resin, and a base material B that is the member to be fitted, the method including:

a first bonding step for bonding the base material A and the solid bonding agent by melting and then solidifying the solid bonding agent in a state in which the solid bonding agent is brought into surface contact with the base material A; and
a second bonding step for bonding the base material A and the base material B by melting and then solidifying the solid bonding agent in a state in which the solid bonding agent bonded to the base material A is brought into surface contact with the base material B;
wherein the amorphous thermoplastic resin has an epoxy equivalent of 1,600 or more or does not contain an epoxy group and has a heat of fusion of 15 J/g or less.

5. The method for producing a bonded body according to claim 4, wherein in the first bonding step, the solid bonding agent is heated to 100°C to 300°C to be melted and then solidified.

6. The method for producing a bonded body according to claim 4, wherein in the second bonding step, the solid bonding agent is melted by at least one selected from the group consisting of contact heating, warm air heating, hot press, infrared heating, hot plate welding, ultrasonic welding, vibration welding, and high-frequency induction welding and then solidified.

7. The method for producing a bonded body according to claim 4, wherein in the second bonding step, the solid bonding agent is melted at a heating temperature of 100°C to 400°C under a pressure of 0.01 to 20 MPa and then solidified.

8. The method for producing a bonded body according to any one of claims 1 to 7, wherein the solid bonding agent before melting has a film shape.

9. A bonded body obtained by bonding a base material A that is a member to be fitted having a portion to be fitted, and a base material B that is a fitting member having a fitting portion to be fitted to the portion to be fitted of the member to be fitted, via an adhesive layer,
wherein the adhesive layer is formed by disposing a solid bonding agent containing an amorphous thermoplastic resin that is at least one type selected from a thermoplastic epoxy resin and a phenoxy resin, and has an epoxy equivalent of 1,600 or more and a heat of fusion of 15 J/g or less, between the base material A and the base material B, melting the solid bonding agent by heating and pressurizing, and solidifying the solid bonding agent.

10. The bonded body according to claim 9, wherein the heating and pressurizing are performed under conditions of 100°C to 400°C and 0.01 to 20 MPa.

[Fig. 1]

[Fig. 2]

## INTERNATIONAL SEARCH REPORT

| International application No. |
|---|
| **PCT/JP2023/045590** |

| A. | CLASSIFICATION OF SUBJECT MATTER |
|---|---|

*C09J 163/00*(2006.01)i; *B32B 7/12*(2006.01)i; *B32B 27/00*(2006.01)i; *C09J 5/06*(2006.01)i; *C09J 171/08*(2006.01)i
FI:  C09J163/00; C09J5/06; C09J171/08; B32B7/12; B32B27/00 D

According to International Patent Classification (IPC) or to both national classification and IPC

| B. | FIELDS SEARCHED |
|---|---|

Minimum documentation searched (classification system followed by classification symbols)

C09J163/00; B32B7/12; B32B27/00; C09J5/06; C09J171/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/209116 A1 (NIPPON STEEL CHEMICAL & MAT CO LTD) 06 October 2022 (2022-10-06)<br>    claims, paragraphs [0042]-[0047], examples | 1-10 |
| X | WO 2018/124215 A1 (NIPPON STEEL & SUMIKIN CHEMICAL CO., LTD.) 05 July 2018 (2018-07-05)<br>    claims, paragraph [0034], examples | 1-10 |
| A | JP 2002-293328 A (SEKISUI PLASTICS CO., LTD.) 09 October 2002 (2002-10-09)<br>    claims | 1-10 |
| A | JP 07-037407 A (AICA KOGYO CO., LTD.) 07 February 1995 (1995-02-07)<br>    claims | 1-10 |
| A | JP 2016-033391 A (MITSUBISHI PLASTICS INFRATEC CO., LTD.) 10 March 2016 (2016-03-10)<br>    claims | 1-10 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

24

**INTERNATIONAL SEARCH REPORT**

| International application No. |
| --- |
| **PCT/JP2023/045590** |

| C. | DOCUMENTS CONSIDERED TO BE RELEVANT | |
| --- | --- | --- |
| Category* | Citation of document, with indication, where appropriate, of the relevant passages | Relevant to claim No. |
| P, X | WO 2023/127665 A1 (RESONAC CORP) 06 July 2023 (2023-07-06)<br>claims, examples | 1-3, 8-10 |
| P, A | | 4-7 |

Form PCT/ISA/210 (second sheet) (July 2022)

**INTERNATIONAL SEARCH REPORT**
Information on patent family members

International application No.

**PCT/JP2023/045590**

| Patent document cited in search report | | | Publication date (day/month/year) | Patent family member(s) | Publication date (day/month/year) |
|---|---|---|---|---|---|
| WO | 2022/209116 | A1 | 06 October 2022 | (Family: none) | |
| WO | 2018/124215 | A1 | 05 July 2018 | US 2021/0129488 A1 claims, paragraph [0057], examples EP 3564029 A1 CN 110121413 A KR 10-2019-0095318 A TW 201831321 A CN 110461605 A | |
| JP | 2002-293328 | A | 09 October 2002 | (Family: none) | |
| JP | 07-037407 | A | 07 February 1995 | US 5516390 A claims | |
| JP | 2016-033391 | A | 10 March 2016 | (Family: none) | |
| WO | 2023/127665 | A1 | 06 July 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019157018 A
- JP 10017685 A
- JP 10168417 A